# EUROPEAN PATENT SPECIFICATION

(11) **EP 0 827 894 B1**
(45) Date of publication and mention of the grant of the patent: **07.11.2001**
(21) Application number: 97202588.6
(22) Date of filing: 22.08.1997
(51) Int. Cl.: B62D 25/08

(54) **Motor vehicle body**
Kraftfahrzeugkarosserie
Carrosserie d'un véhicule à moteur

(30) Priority: 04.09.1996 DE 29615364 U
(43) Date of publication of application: 11.03.1998
(73) Proprietor: Delphi Automotive Systems Deutschland GmbH, D-42369 Wuppertal (DE)
(72) Inventor: Dancasius, Michael, 42105 Wuppertal (DE); Büngeler, Jörg, 47495 Rheinberg (DE)
(74) Representative: Denton, Michael John

(56) References cited:
- DE-A- 4 139 466
- GB-A- 1 438 703
- US-A- 2 955 870
- US-A- 4 750 780
- PATENT ABSTRACTS OF JAPAN vol. 008, no. 032 (M-275), 10 February 1984 & JP 58 188760 A (TOYO KOGYO KK), 4 November 1983,

## Description

### Technical Field

This invention is based on a motor vehicle body according to the preamble of Claim 1, as disclosed in DE-A-4 139 466.

### Background of the Invention

It is generally known to attach cockpit units to a cross-member which is arranged between the so-called A-pillars or A-posts. The systems and materials used for this differ considerably.

In a first variant the cross-member is a constituent part of the welded shell structure of the passenger car, so that there is an advantageous rigid connection to the body. The cockpit units are mounted on the cross-member and optionally on the body as individual parts, separately, not as a system. The cross-member comprises the same material as the remaining body, preferably steel. The combination of different materials is not possible.

A second variant provides for bolting a cross-member between the A-pillars as a pre-mountable constituent part of the body. This also makes the use of materials such as aluminium, magnesium, plastics and composite plastics materials for the cross-member possible, whilst the remaining body comprises steel. The consequence of bolting the cross-member is a low rigidity of the system. The cockpit units are mounted separately as individual components.

In a further variant the cross-member is an individual module which is fitted with cockpit units. After fixing the individual cockpit units the entire cockpit module is then mounted between the A-pillars of the body. The assembly of individual parts and components into a module outside the body is extremely practical and permits the prior functional testing of the module. All the same, the module is complicated to fix, and so the connection to the body and/or to the A-pillars is not optimal as regards rigidity.

### Summary of the Invention

The object of the invention is to design a motor vehicle body with a cross-member according to the preamble of Claim 1 in such a way that modular prefabrication and simple final assembly is possible whilst maintaining high rigidity.

This object is achieved by the features specified in the characterising portion of Claim 1.

The division of the cross-member enables the pre- and final assembly to be simplified and made more flexible and guarantees high rigidity and mechanical stability. The rigidity of the body in the cockpit region can be varied and optimised by means of the many possibilities as regards the manufacturing process, the material, the form and the method of fixing. Rigidity in particular depends on the type of fixing. The divided construction chiefly provides two modules which consequently permit specific and hence improved assembly techniques, particularly for the auxiliary part with the numerous cockpit units. Furthermore, individual component parts can easily be exchanged, e.g. because of a defect or different model equipment. The main part and the auxiliary part can be formed in such a way that the cockpit units engage in the cavity of the cross-member through corresponding openings in the two parts and thus save space.

Advantageous embodiments of the subject matter of Claim 1 are specified in the dependent claims.

The cross-member is divided into two parts. A main part is fixed between the A-pillars as rigidly as possible, either as a pre-assembly module or as an integrated part belonging to the body. The main part may be in one piece or be composed of several components. An auxiliary part is equipped with cockpit units in a pre-assembly step. The assembly of this complete module then takes place, wherein the structures of the auxiliary part and the main part complement each other by the assembly to a rigid cross-member. The auxiliary part is fixed to the main part and optionally to the A-pillars. This produces an extremely rigid and modular body structure in the cockpit region. The main purpose of the main part is to ensure the mechanical requirements and it is also accordingly fixed between the A-pillars. The auxiliary part primarily forms an assembly base which only forms the cross-member after assembly with the main part and thus additionally stiffens the body.

If assembly conditions are to be improved or an increase rigidity is required, the main part and/or the auxiliary part may be composed of several components.

### Brief Description of the Drawings

The present invention will now be described, by way of example, with reference to the accompanying drawings, in which:-
Figure 1 shows a greatly simplified elementary diagram of a motor vehicle body in the cockpit region;
Figure 2 shows a cross-section according to A-A in Figure 1;
Figure 3a-e show different embodiments of cross-members in cross-section;
Figures 3f-h show further exemplary embodiments of cross-members with main and auxiliary parts which are composed of several components; and
Figure 4 shows a diagrammatic view of a front motor vehicle body with a cross-member shown section-wise.

### Description of the Preferred Embodiment

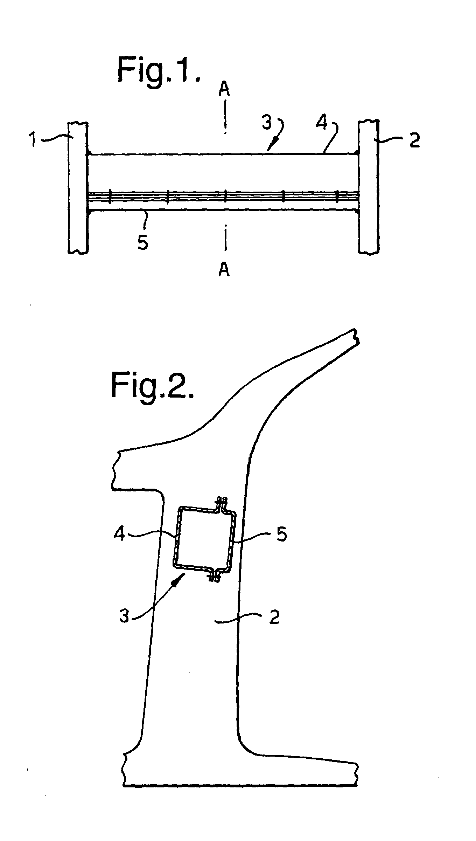

Figure 1 shows a motor vehicle body in the region of the cockpit in a greatly simplified form. A horizontally arranged cross-member 3 is fixed between two so-called vertically arranged A-pillars 1,2. The cross-member 3 serves on the one hand to stiffen the body and on the other hand as an acceptance base for many components of the cockpit such as steering column, ventilation system, airbag, instrument panel, claddings, etc. The illustration of these mounted components has been dispensed with to explain the invention.

The two A-pillars 1,2 comprise steel and are integral components of the remaining motor vehicle body. The cross-member 3 is separately manufactured and mounted.

It can be seen from Figure 2 that the cross-member is composed of a main part 4 and an auxiliary part 5 which form an enclosed hollow section in this example. Hollow sections have proved satisfactory as structures with a high load capacity and are also preferably produced here. The main part 4 of the cross-member 3 is fixed to the two A-pillars 1,2. The fixing method, such as welding, bolting, bonding, must guarantee the rigidity of the body and depends on the material, e.g. steel, aluminium, magnesium, and on the process, e.g. deep-drawing, extrusion, injection moulding, casting, used to manufacture the main part 4. The auxiliary part 5 is put into the body after being equipped with cockpit units (not shown) and suitably fixed to the main part 4. An additional fixing to the A-pillars 1,2 optionally takes place. Furthermore it is possible to support and/or to fix the main part 4 and the auxiliary part 5 on and/or to the remaining components of the body, e.g. the splashboard, with brackets (not shown).

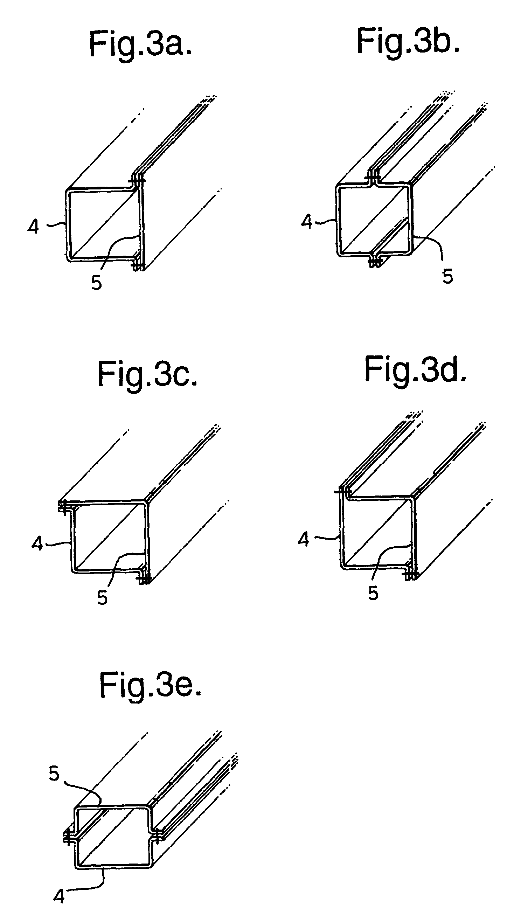

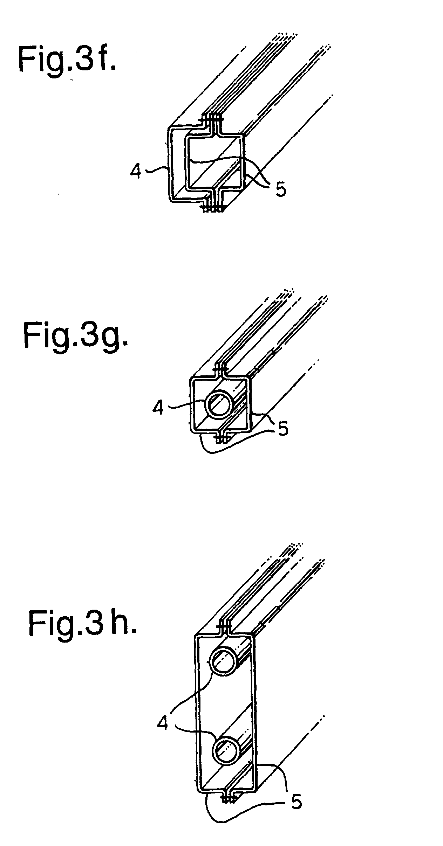

Figures 3a-e show several rectangular cross-members 3 which are composed of differently shaped main 4 and auxiliary parts 5. Further differently shaped structures as well as round ones are conceivable. The current section structures, such as I, U, C, T, X, L, O, are advantageous, however, because rigid hollow sections can be produced from them in a simple and flexible manner.

Figs 3f-h show possibilities of forming the main part 4 and/or the auxiliary part 5 from several components. This cab additionally stiffen the cross-member 3. Furthermore, such arrangements may also be preferably selected for technical fixing and assembly reasons. Arrangements including or surrounding each other are possible, so that the rigidity is increased among other things. Further versions permit auxiliary parts 5 which are divided up in a sectional manner. Individual components arranged parallel are also conceivable for the main 4 or auxiliary part 5, or other and/or combined solutions.

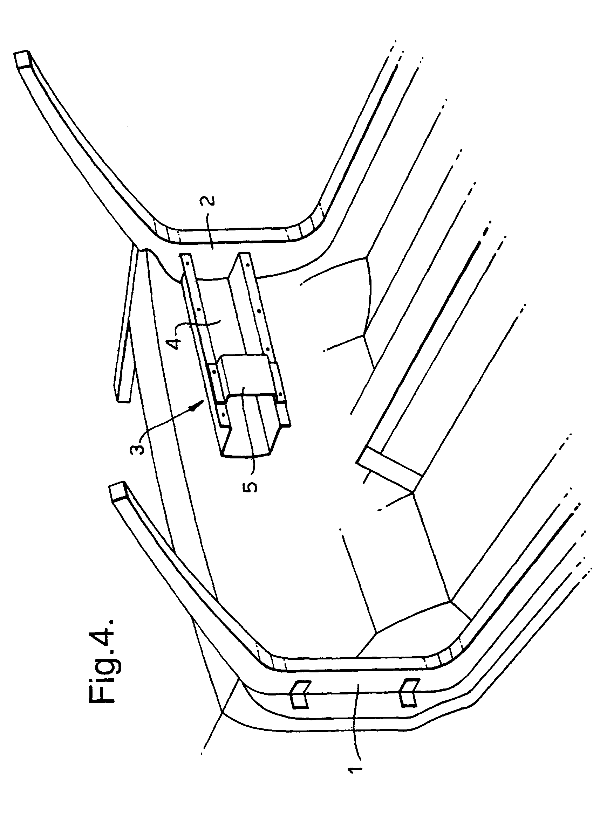

Figure 4 shows a basic body in the region of the cockpit. The cross-member 3 is only shown in a partial region so that its section can be clearly seen. The main part 4 is C-shaped and welded to the A-pillars 1,2. The auxiliary part 5 is also C-shaped and shown only with the aid of a small section. The free legs of the two sections are edged and lie against each other. These edges serve for the mutual fixing of the main 4 and the auxiliary part 5 by means of bolted connections for example. The fixing points and/or fixing method is selected in such a way that simple assembly is possible despite the cockpit units which are not shown here.

## Claims

1. A motor vehicle body comprising a cross-member (3) extending between two A-pillars (1,2), wherein the cross-member (3) comprises a main part (4) and an auxiliary part (5), wherein the main part (4) and the auxiliary part (5) have structures increasing the rigidity of the cross-member (3), the main part (4) being fixed between the A-pillars (1,2), **characterised in that** the auxiliary part (5) equipped with pre-assembled cockpit units is fixed at least to the main part (4).

2. A motor vehicle body according to Claim 1, wherein the auxiliary part (5) is fixed to the A-pillars (1,2).

3. A motor vehicle body according to Claim 1 or Claim 2, wherein the main part (4) and/or auxiliary part (5) is supported on or fixed to the body with bracket-like devices.

4. A motor vehicle body according to any one of Claims 1 to 3, wherein the main part (4) and/or the auxiliary part (5) are composed of several components.

5. A motor vehicle body according to Claim 4, wherein the main part (4) and/or auxiliary part (5) are composed of components arranged in parallel to one another.

6. A motor vehicle body according to Claim 4 or Claim 5, wherein the auxiliary part (5) surrounds the main part (4) or the main part (4) surrounds the auxiliary part (5).

7. A motor vehicle body according to any one of Claims 1 to 6, wherein the main part (4) and/or the auxiliary part (5) are T-shaped, U-shaped, C-shaped, L-shaped, I-shaped, O-shaped, or X-shaped.

8. A motor vehicle body according to any one of Claims 1 to 7, wherein the main part (4) and/or the auxiliary part (5) comprise a deep-drawn sheet metal or a rolled section of aluminium or steel.

9. A motor vehicle body according to any one of Claims 1 to 7, wherein the main part (4) and/or the auxiliary part (5) comprise an extruded section of aluminium or magnesium.

10. A motor vehicle body according to any one of Claims 1 to 7, wherein the main part (4) and/or the auxiliary part (5) comprise an injection moulded section of aluminium, magnesium or carbon.

11. A motor vehicle body according to any one of Claims 1 to 7, wherein the main part (4) and/or the auxiliary part (5) comprise composite materials.

## Patentansprüche

1. Kraftfahrzeugkarosserie mit einem Querelement (3), das sich zwischen zwei A-Säulen (1,2) erstreckt, wobei das Querelement (3) ein Hauptteil (4) und ein Zusatzteil (5) umfaßt, wobei das Hauptteil (4) und das Zusatzteil (5) Strukturen aufweisen, die die Starrheit des Querelementes (3) erhöhen, wobei das Hauptteil (4) zwischen den A-Säulen (1,2) befestigt ist, **dadurch gekennzeichnet, daß** das Zusatzteil (5), das mit vormontierten Cockpiteinheiten ausgerüstet ist, zumindest an dem Hauptteil (4) befestigt ist.

2. Kraftfahrzeugkarosserie nach Anspruch 1, wobei das Zusatzteil (5) an den A-Säulen (1,2) befestigt ist.

3. Kraftfahrzeugkarosserie nach Anspruch 1 oder Anspruch 2, wobei das Hauptteil (4) und/oder das Zusatzteil (5) auf oder an der Karosserie mit halterungsartigen Vorrichtungen getragen oder befestigt ist.

4. Kraftfahrzeugkarosserie nach einem der Ansprüche 1 bis 3, wobei das Hauptteil (4) und/oder das Zusatzteil (5) aus verschiedenen Komponenten besteht.

5. Kraftfahrzeugkarosserie nach Anspruch 4, wobei das Hauptteil (4) und/oder Zusatzteil (5) aus Komponenten bestehen, die parallel zueinander angeordnet sind.

6. Kraftfahrzeugkarosserie nach Anspruch 4 oder Anspruch 5, wobei das Zusatzteil (5) das Hauptteil (4) umgibt, oder das Hauptteil (4) das Zusatzteil (5) umgibt.

7. Kraftfahrzeugkarosserie nach einem der Ansprüche 1 bis 6, wobei das Hauptteil (4) und/oder das Zusatzteil (5) T-förmig, U-förmig, C-förmig, L-förmig, I-förmig, O-förmig oder X-förmig ist.

8. Kraftfahrzeugkarosserie nach einem der Ansprüche 1 bis 7, wobei das Hauptteil (4) und/oder das Zusatzteil (5) ein tiefgezogenes Blech oder ein gewalztes Profil aus Aluminium oder Stahl umfaßt.

9. Kraftfahrzeugkarosserie nach einem der Ansprüche 1 bis 7, wobei das Hauptteil (4) und/oder das Zusatzteil (5) ein stranggepreßtes Profil aus Aluminium oder Magnesium umfaßt.

10. Kraftfahrzeugkarosserie nach einem der Ansprüche 1 bis 7, wobei das Hauptteil (4) und/oder das Zusatzteil (5) ein spritzgegossenes Profil aus Aluminium, Magnesium oder Kohlenstoff umfaßt.

11. Kraftfahrzeugkarosserie nach einem der Ansprüche 1 bis 7, wobei das Hauptteil (4) und/oder das Zusatzteil (5) Schichtstoffmaterialien umfassen.

## Revendications

1. Carrosserie de véhicule à moteur comportant un élément transversal (3) s'étendant entre deux piliers A (1, 2), l'élément transversal (3) comportant une partie principale (4) et une partie auxiliaire (5), la partie principale (4) et la partie auxiliaire (5) ayant des structures augmentant la rigidité de l'élément transversal (3), la partie principale (4) étant fixée entre les piliers A (1, 2), **caractérisée en ce que** la partie auxiliaire (5), munie d'unités d'habitacle pré-assemblées, est fixée au moins sur la partie principale (4).

2. Carrosserie de véhicule à moteur selon la revendication 1, dans laquelle la partie auxiliaire (5) est fixée sur les piliers A (1, 2).

3. Carrosserie de véhicule à moteur selon la revendication 1 ou 2, dans laquelle la partie principale (4) et/ou la partie auxiliaire (5) est supportée sur la carrosserie, ou fixée sur celle-ci, à l'aide de dispositifs analogues à des étriers.

4. Carrosserie de véhicule à moteur selon l'une quelconque des revendications 1 à 3, dans laquelle la partie principale (4) et/ou la partie auxiliaire. (5) sont composées de plusieurs composants.

5. Carrosserie de véhicule à moteur selon la revendication 4, dans laquelle la partie principale (4) et/ou la partie auxiliaire (5) sont composés de composants agencés parallèlement les uns aux autres.

6. Carrosserie de véhicule à moteur selon la revendication 4 ou 5, dans laquelle la partie auxiliaire (5) entoure la partie principale (4), ou la partie principale (4) entoure la partie auxiliaire (5).

7. Carrosserie de véhicule à moteur selon l'une quelconque des revendications 1 à 6, dans laquelle la partie principale (4) et/ou la partie auxiliaire (5) sont en forme de T, en forme de U, en forme de C, en forme de L, en forme de I, en forme de O, ou en forme de X.

8. Carrosserie de véhicule à moteur selon l'une quelconque des revendications 1 à 7, dans laquelle la partie principale (4) et/ou la partie auxiliaire (5) comportent un métal en feuille fortement étiré ou un tronçon laminé d'aluminium ou d'acier.

9. Carrosserie de véhicule à moteur selon l'une quelconque des revendications 1 à 7, dans laquelle la partie principale (4) et/ou la partie auxiliaire (5) comportent un tronçon d'aluminium ou de magnésium extrudé.

10. Carrosserie de véhicule à moteur selon l'une quelconque des revendications 1 à 7, dans laquelle la partie principale (4) et/ou la partie auxiliaire (5) comportent un tronçon moulé par injection d'aluminium, de magnésium, ou de carbone.

11. Carrosserie de véhicule à moteur selon l'une quelconque des revendications 1 à 7, dans laquelle la partie principale (4) et/ou la partie auxiliaire (5) sont constitués de matériaux composites.
